# EUROPEAN PATENT APPLICATION

(11) **EP 4 446 381 A1**
(43) Date of publication of application: **16.10.2024**
(21) Application number: 23168019.0
(22) Date of filing: 14.04.2023
(51) Int. Cl.: C08L 33/10

(54) **HIGH HEAT AND HIGH IMPACT PMMA COMPOSITION**

(71) Applicant: Trinseo Europe GmbH, 8808 Pfaeffikon (CH)
(72) Inventor: GE, Jiaxin Jason, 8808 Pfaeffikon (CH); WANG, Jing-Han, 8808 Pfaeffikon (CH)
(74) Representative: SSM Sandmair

(57) **Abstract**

An impact modified hydrophobic acrylic composition includes (a) a hydrophobic acrylic copolymer having: (i) monomer units chosen from tert-butyl cyclohexyl methacrylate, 3,3,5-trimethylcyclohexyl(meth)acrylate, and a mixture thereof; (ii) methyl methacrylate monomer units; and (iii) optionally other monomer units copolymerizable with methyl methacrylate; (b) optionally, other (meth)acrylic copolymers; (c) one or more core-shell impact modifiers, wherein the core-shell impact modifiers have a volume average particle size of from 70 to 350nm, wherein the melt flow rate of the impact modified hydrophobic acrylic composition is greater than 1.0/10 minutes at 230°C under 3.8 kg; and wherein the notched Izod impact strength of the impact modified hydrophobic acrylic composition is greater than 4.5kJ/m².

## Description

### FIELD OF THE INVENTION

The invention relates to an impact-modified hydrophobic acrylic copolymer composition.

### BACKGROUND OF THE INVENTION

Thermoplastic polymers and copolymers, especially (meth)acrylic polymers, have excellent characteristics such as transparency, mechanical properties and processability and are widely used in various fields such as automobile parts, electrical parts, industrial parts, optical materials, various parts of household electrical appliances, aesthetical parts, miscellaneous goods and the like.

High Tg acrylic polymers are useful in applications requiring a high optical clarity and high heat resistance, such as automotive front inner lenses, thin wall parts, lighting pipes, optical protection/retardation films in electronic devices, solar panels/films, cell phone back covers, pMMA/PC front films for cell phones and tablets, home appliance, composites, and others.

The impact resistance of acrylic resins can be improved by the incorporation of high levels of impact modifiers. However, current commercial impact-modified acrylic compositions do not have the combination of high heat resistance, high impact resistance, water haze resistance, sufficient melt flow, and weathering resistance desired for high-performance applications, such as in automotive LED front/rear signature lighting pipes, automotive LED grille lighting, automotive LED head lamp covers, protective optical films and/or moisture barrier films in signages, automotive black trims/pillars, pMMA/PC front films for cell phones and tablets, surface protection layers in coextruded products/3-D complicated profiles, railing/decking, and others.

### Summary of the invention

According to a first aspect of the present invention, a composition containing a reactive impact modified hydrophobic acrylic composition is disclosed. The composition includes from 40 to 95, preferably from 50 to 90, more preferably from 50 to 80, and most preferably from 55 to 70 percent by weight of a hydrophobic acrylic copolymer, based on the weight of the hydrophobic polymer plus impact modifier. The hydrophobic acrylic copolymer may be characterized as having a Tg of from 111°C to 140°C, preferably from 113°C to 135°C, preferably from 115°C to 130°C, and more preferably from 116°C to 125°C. The hydrophobic acrylic copolymer may be further characterized as
1) from 0.1 to 20, preferably 0.3 to 10, more preferably from 0.5 to 5 weight percent of monomer units chosen from tert-butyl cyclohexyl methacrylate, 3,3,5-trimethylcyclohexyl(meth)acrylate, and a mixture thereof;
2) from 50 to 80 weight percent methyl methacrylate monomer units;
3) optionally from 0 to 49.9 weight percent of other monomer units copolymerizable with methyl methacrylate;

Each of the foregoing percentages is based on the total monomer units in the hydrophobic acrylic copolymer.

The composition further includes from 5 to 60, preferably 10 to 50, more preferably 20 to 50, and most preferably 30 to 45 weight percent of one or more core-shell impact modifiers. The core-shell impact modifiers have a volume average particle size of from 70 to 350 nm, preferably from 100 to 350 nm, preferably 150-300 nm, more preferably from 200-250 nm; wherein the Tg of said shell layer is greater than 105°C, preferably greater than 107°C. Optionally, the composition also includes other (meth)acrylic copolymers.

The melt flow rate of the impact modified hydrophobic acrylic composition is greater than 1.0, preferably greater than 1.2, and more preferably greater than 1.5 g/10 minutes at 230°C under 3.8 kg; and wherein the notched Izod impact strength of the impact modified hydrophobic acrylic composition is greater than 4.5kJ/m², preferably greater than5.4kJ/m², and more preferably greater than 6.4kJ/m².

According to another embodiment, an article made from the inventive impact modified hydrophobic acrylic composition is disclosed. Exemplary articles include automotive LED head map covers, automotive LED front/rear signature lighting pipes, optical films, moisture barrier films, digital printing films, weatherable surface protection layers, surface protecting layers for decking/railing, automotive, electronics, medical, digital printing, laser cutting, building and construction, lighting pipes, thin wall parts, optical lenses, extruded films, (co-)extruded sheets/profiles, thermo-formable sheets, cast sheets, composites, medical devices, and LED/OLED displays

### DETAILED DESCRIPTION OF THE INVENTION

The inventors have now developed and optimized an impact-modified acrylic composition incorporating selected core-shell acrylic impact modifiers having a particle size diameter of 150-300nm into a hydrophobic high heat pMMA copolymer. The resulting composition has high impact resistance, excellent water haze resistance, sufficiently high melt flow, along with excellent long-term weathering resistance. The novel hydrophobic pMMA impact compositions are useful in automotive LED front/rear signature lighting pipes, automotive LED head lamp covers, automotive LED grille lighting, LED front thick lenses, automotive black trims/pillars, window profiles, decking/railing, capstock/surface protection layer, co-extruded sheets, medical devices, pMMA/PC front films for cell phones and tablets, and electronic components, etc.

"Copolymer" as used herein means a polymer having two or more different monomer units, including copolymers, and polymers with three or more different monomers, such as terpolymers and tetrapolymers. Accordingly, the terms "co-, ter- and tetra-polymer" encompass any polymer having more than one type of comonomer. "Polymer" is used to mean both homopolymer and copolymers. Polymers may be straight chain, branched, star, comb, block, or any other structure. The polymers may be homogeneous, heterogeneous, and may have a gradient distribution of co-monomer units. All references cited are incorporated herein by reference. As used herein, unless otherwise described, percent shall mean weight percent. Molecular weight is a weight average molecular weight as measured by gel permeation chromatography (GPC) using polymethylmethacrylate standards. In cases where the polymer contains some crosslinking, and GPC cannot be applied due to an insoluble polymer fraction, soluble fraction / gel fraction or soluble faction molecular weight after extraction from gel is used to determine weight average molecular weight.

By "hydrophobic" as used herein means that pMMA copolymers contain at least 0.2 weight. % of tert-butyl cyclohexyl (meth)acrylate and/or 3,3,5-trimethyl cyclohexyl (meth)acrylate hydrophobic monomer units.

By "(meth)acrylic" or "(meth)acrylate" as used herein denotes both the acrylate and the methacrylate.

In one embodiment, the hydrophobic copolymer of the invention passes an 85°C/85%RH test. In another embodiment, the hydrophobic copolymer of the invention passes a -40°C to 80°C/85%RH humidity freeze cycling test.

### Hydrophobic high Tg copolymers or terpolymers

"High Tg monomer" refers to a monomer that, when polymerized, produces a polymer having a Tg of greater than 116°C, and preferably greater than 120°C, and more preferably of greater than 130°C. Examples of useful hydrophobic, high Tg monomers include, but are not limited to, tert-butyl cyclohexyl methacrylate, and 3,3,5-trimethylcyclohexyl(meth)acrylate, and its isomer blends.

The hydrophobic, high Tg monomers are polymerized with methylmethacrylate, and optionally other acrylic monomers, to form hydrophobic, high Tg copolymers and terpolymers of the inventive composition. The composition of the invention contains from 40 to 95, preferably 50 to 90, and more preferably from 50 to 80, and more preferably 55 to 70 weight percent of the hydrophobic high Tg copolymer or terpolymer.

The hydrophobic high Tg copolymer or terpolymer contains 0.1 to 20, preferably 0.3 to 10, and more preferably from 0.5 to 5 weight percent of hydrophobic monomer.

### Tert-butyl cyclohexyl methacrylate

Tert-butyl cyclohexyl (meth)acrylate has the structural formulas below:

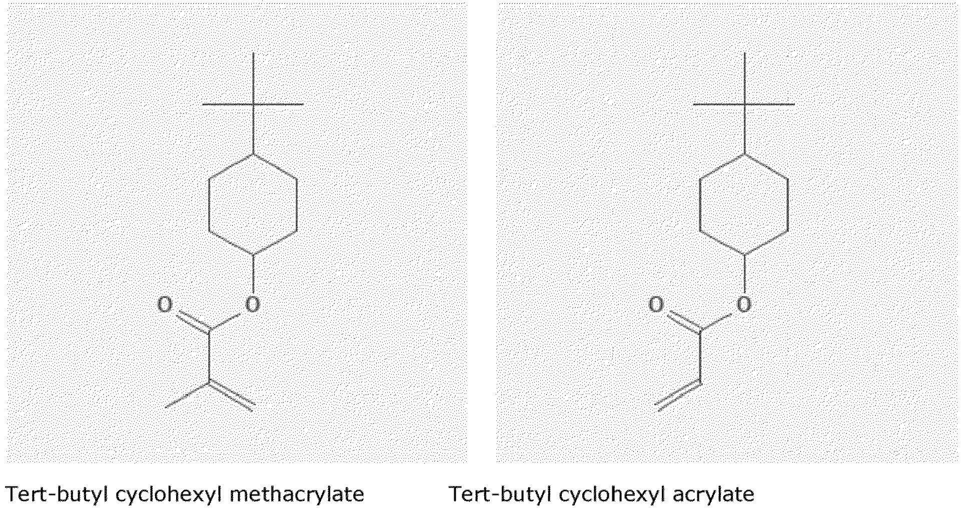

The monomer is a mixture of the cis- and trans- forms, having a trans/cis ratio of between 30/70 and 97/3, preferably 40/60 to 80/20, and more preferably 50/50 to 75/25.

### 3,3,5-trimethylcyclohexyl(meth)acrylate

3,3,5-trimethylcyclohexyl(meth)acrylate has the structural formulas below:

The monomer is a mixture of the cis- and trans- forms.

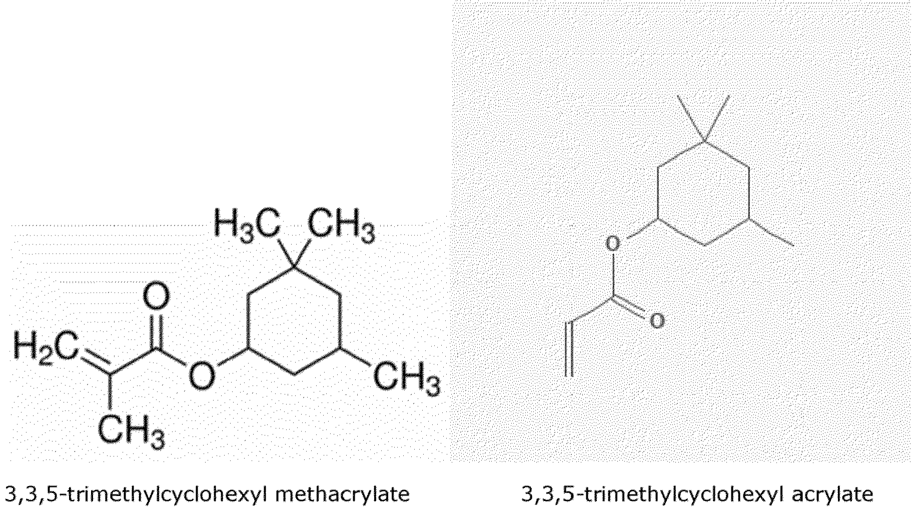

The level of tert-butyl cyclohexyl methacrylate or 3,3,5-trimethylcyclohexyl methacrylate in the final copolymer generally ranges from 0.2 - 20 weight percent, and more preferably from 0.5 to 10 weight percent based on the total monomer units in the copolymer. It has been found that as little as 1 weight percent, and even 0.5 weight percent of tert-butyl cyclohexyl methacrylate, provides a copolymer having a hydrophobic character. In certain embodiments, the Tg of the copolymer is from 116°C to 140°C.

### Acrylic monomers, MMA

One or more of the hydrophobic, high Tg monomers, is copolymerized with one or more other monomers. In a preferred embodiment of the invention the copolymer contains at least 50 weight percent of methyl methacrylate monomer units, preferably at least 70 weight percent and more preferably at least 80 weight percent methyl methacrylate monomer units make up the copolymer.

The copolymer of the invention, in addition to the hydrophobic, high Tg monomer(s), and methyl methacrylate, may include 0 to 49.5 weight percent of other acrylate and methacrylate monomers or other ethylenically unsaturated monomers, including but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers. (Meth) acrylic acids such as methacrylic acid and acrylic acid can be useful for the monomer mixture. In addition to carboxyl functionality, other functionality can be added to the high molecular weight acrylic process aid through functional comonomers, including epoxy (such as glycidyl methacrylate), hydroxyl, and anhydride functional groups. Functional monomer units (monomer units having a functional group) can be present at up to 70 weight percent of the acrylic polymer, preferably up to 50 weight percent.

In a preferred embodiment, the acrylic copolymer has a high Tg of greater than 115°C, more preferably greater than 120°C, greater than 125°C, greater than 130°C, greater than 135°C, and even greater than 140°C. In addition to the tert-butyl cyclohexyl methacrylate and 3,3,5-trimethylcyclohexyl(meth)acrylate, other high Tg monomers may optionally be present at levels of 0 to 25 weight percent, and more preferably from 0 to 10 weight percent. The other high Tg monomers may be hydrophilic, hydrophobic or have a neutral character, and include, but are not limited to methacrylic acid, acrylic acid, itaconic acid, alpha methyl styrene, maleic anhydride, maleimide, isobornyl methacrylate, norbornyl methacrylate, t-butyl methacrylate, cyclohexyl methacrylate, acrylamide and methacrylamide.

In one embodiment, a terpolymer of MMA/methacrylic acid and 3,3,5-trimethylcyclohexyl (meth)acrylate provides a useful terpolymer.

In one embodiment it was found that the hydrophobic effect of the tert-butyl cyclohexyl methacrylate and/or 3,3,5-trimethylcyclohexyl(meth)acrylate is strong enough to overcome the hydrophilic effect of hydrophilic comonomers used at lower levels, to produce an over-all hydrophobic copolymer.

The weight average molecular weight of the hydrophobic high heat pMMA copolymers in polymer blends is higher than 70,000 g/mole, preferably higher than 80,000 g/mole, more preferably higher than 90,000 g/mole. Increasing the molecular weight of the hydrophobic pMMA copolymer increases chemical resistance.

The hydrophobic copolymers of the invention may be obtained through melt polymerization, including but not limited to solution polymerization, emulsion polymerization, and suspension polymerization.

The glass transition temperature (Tg) values of neat pMMA copolymers is in the range of 114°C to 140°C, preferably from 115°C to 135°C, more preferably from 115°C to 130°C, and most preferably from 117°C to 125°C. The weight average molecular weight of the neat pMMA copolymers was in the range of 60,000 g/mole-120,000 g/mole, preferably in 65,000 g/mole-110,000 g/mole.

### Impact modifiers

Impact modifiers used in the embodiments of the invention may be core-shell impact modifiers. In one preferred embodiment, the core-shell impact modifier has an acrylic shell.

Preferred core-shell impact modifiers have a hard core. The core-shell impact modifiers have a volume average particle size of from 70 to 350 nm, preferably 100 to 350 nm, preferably 150-300, more preferably from 200-250 nm. In one embodiment, the shell contains some longer chain acrylic monomer units, making the shell slightly hydrophobic. The hydrophobic shell increases the compatibility of the core-shell impact modifier with the hydrophobic acrylic copolymer. Useful longer chain monomer units in the shell include butyl (meth)acrylate, C₆ to C₁₆(meth)acrylates, and even low levels of tert-butyl cyclohexyl (meth)acrylate and/or 3,3,5-trimethyl cyclohexyl (meth)acrylate.

In a preferred embodiment the core-shell impact modifiers of the invention are comprised of greater than 45 weight percent, preferably greater than 50 weight percent, of a rubber, having a Tg of less than 0°C, preferably less than -10°C, more preferably less than -20°C.

The composition of the invention contains from 5 to 60, preferably 10 to 50, preferably 20 to 50, more preferably 25 to 50, and most preferably 30 to 45 weight percent of one or more core-shell impact modifiers, based on total weight of the impact modifier and the copolymer, with correspondingly 40 to 95, 50 to 90, 50 to 80, 50 to 75 and 55 to 70 weight percent of the hydrophobic acrylic copolymer. Since the impact modifiers of the invention are more efficient, it is possible to use a lower loading.

The melt flow rate values of the hydrophobic impact pMMA copolymers are higher than 0.7 g/10 minutes at 230°C/3.8kg, preferably higher than 1.0 g/10 minutes, more preferably greater than 1.2 g/10 minutes, and more preferably higher 1.5 g/10 minutes. The Vicat softening temperatures of impact copolymer resins were detected at least at 110°C under 10N, preferably higher than 112°C, and more preferably higher than 114°C. The delta water haze values from 3.2 mm molded plaques were controlled less than 14% after the exposure time of 168 hours in 70°C water bath immersion tests, preferably less than 10%, and more preferably less than 8%. The water haze gain of the impact modified hydrophobic acrylic copolymer is less than 8.0%, preferably less than 6.0%, more preferably less than 4.0%, and even less than 2.0%. The notched Izod impact strength is greater than 4 kJ/m², preferably greater than 5 kJ/m², and more preferably greater than 6.4 kJ/m². The impact modified hydrophobic acrylic composition has a light transmission retention of 86% after 168 hours at 70°C water bath immersion tests, preferably higher than 90%, more preferably higher than 94%, and even higher than 96%.

### Additives

The composition of the invention can be blended with typical additives used in thermoplastics. These include, but are not limited to fillers, surface modifying additives, processing aids, fibers, lubricant agents, matting agents, heat stabilizers, flame retardants, synergists, matting agents, plasticizers, fillers, coloring agents, pigments, antioxidants, antistatic agents, surfactants, toner, refractive index matching additives, additives with specific light diffraction, light absorbing, or light reflection characteristics, and dispersing aids.

Examples of matting agents include, but are not limited to, cross-linked polymer particles of various geometries. The amount of filler and additives included in the polymer compositions may vary from about 0.01% to about 70% of the combined weight of polymer, additives and filler. Generally, amounts from about 5% to about 45%, from about 10% to about 40%, are included.

In one embodiment, selected antioxidants may be used to improve the thermal stability of the composition at high temperature such as 255-275°C and reduce the yellowing at high temperature. The loading of the antioxidants in the final composition are at the levels of ~50 ppm to 3500 ppm, preferably about 100 ppm to about 2500 ppm based on the total weight of the composition. Non-limiting examples of useful antioxidants include sterically hindered phenols, organophosphites hindered amine light stabilizers (HALS), benzotriazoles, triazines, benzophenones, and cyanoacrylates. For example, the copolymer may include 100 to 2000 ppm weight or 2500 ppm weight of antioxidant comprising at least one of hydroxy phenyl benzotriazoles, sterically hindered phenolics, organo-phosphites, hindered amines, and combinations thereof. These antioxidants are used to improve the thermal stability of the resins at high temperature such as from 255°C to 275°C and to reduce the yellowing at high temperature. The loading levels of the antioxidants in the final resin formulations are in the range of from 100 ppm to 2000 ppm weight, or 150ppm to 1900 ppm, or 200 ppm to 1800 ppm or 150 ppm to 1500 ppm, or 100 ppm to 1000 ppm weight.

### Blends with other polymers

Other compatible polymers may optionally be blended with the inventive copolymers to form an alloy. For example, other poly(meth)acrylate copolymers, such as poly(methyl (meth)acrylate)/ethyl(meth)acrylate) copolymer; poly(methyl methacrylate)/methyl acrylate copolymer, polyvinylidene fluoride, poly(styrene-acrylonitrile) (SAN), acrylonitrile-styrene-acrylate (ASA) copolymers, copolymers of vinylidene fluoride and hexafluoropropene; polylactic acid; and combinations thereof may be blended with the polymer composition. The alloy blends could contain any level of other compatible polymers, for example from 1-99%, depending on the final properties desired.

In one preferred embodiment, the other poly(meth)acrylate is 0.5-20 wt%, preferably 5-15 wt% of a hydrophobic copolymer/terpolymer containing butyl methacrylate (BMA)/MMA with a weight average molecular weight in the range of 30,000-50,000 g/mole measured in GPC.

In another preferred embodiment, poly(meth)acrylate copolymers used in an alloy are high molecular weight copolymer, having a weight average molecular weight higher than 70,000 g/mole, preferably higher than 80,000 g/mole, preferably higher than 90,000 g/mole, more preferably higher than 100,000 g/mole. Increasing the molecular weight results in an increase in chemical resistance.

### Properties

The impact modified hydrophobic acrylic composition of the invention provides many improvements over the current art, as seen in the examples. These include improvements of one or more of:
- water haze resistance;
- light transmission retention;
- YI shift;
- surface hardness;
- Vicat heat resistance; and
- melt flow.

### Applications

The compositions of the invention are thermoplastic, and can, in certain embodiments, be easily shaped into sheets, films, light pipe and lenses.

The properties of the inventive compositions provide a high performance impact-modified polymer, making them especially useful for automotive LED signature lighting pipes, automotive head lamp covers, optical films, moisture barrier films, digital printing films, and surface protection layers, such as, for example decking/railing. The compositions of the invention may also find use in other applications requiring one or more of high light transmission, low haze, high heat resistance, high impact resistance, high dimensional stability, high water haze resistance, and sufficiently high melt flow.

Other uses for the inventive, impact-modified acrylic composition of the invention include, but are not limited to, automotive, electronics, medical, digital printing, laser cutting, building and construction, lighting pipes, thin wall parts, optical lenses, extruded films, (co-)extruded sheets/profiles, thermo-formable sheets, cast sheets, composites, medical devices, and others. High heat acrylic films of the invention may be used in LED/OLED displays.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Non-limiting aspects of the invention are summarized below.

### EXAMPLES

### Testing methods:

Injection molded samples: In the testing below involving injection molded samples or plaques, the plaque sample size was molded at 45mm (width) × 67mm (length) × 3.2mm (thickness).

Melt flow rate (MFR) measurement: Instron Ceast MF30 equipment was used for polymers in melt flow rate measurements. The die temperature was controlled at 230°C while the loading cell weight was at 3.8kg. The dried pellets were annealed at ~20°C below the T_{g} over 8 hours.

Gel permeation chromatography (GPC): Waters Alliance 2695 and Waters Differential Refractometer 2410 were used to make polymer molecular weight measurements. Columns were based on two PL Gel mixed C columns and a guard column (7.8 mm I.D. × 30 cm, 5 µm). THF (HPLC grade) was selected as a solvent. Temperature was controlled at 35°C. Ten poly(methyl methacrylate) standards were used in the calibration, ranging in Mₚ (peak molecular weight) from 550 to 1,677,000 g/mole.

NMR: Samples were prepared by dissolving ~200 mg of pellets in ~4 ml CDCl₃ in separate 10 mm NMR tubes for ¹³C NMR. The ¹H spectra were acquired on the Bruker AV III HD 500 (11.07 T) spectrometer with a 5 mm ¹H/¹⁹F/¹³C TXO probe at 25°C before and after derivatization of MAA. The ¹³C spectra were acquired on the Bruker AV 400 (9.4 T) with a 10 mm BBO probe at 50°C.

Differential scanning calorimetry (DSC): The glass transition temperatures of acrylic polymers were measured at a heating rate of 10°C/minutes in N₂ using TA instruments Q2000 DSC, during the second heating. The first heating was used to heat the sample to 170°C at a heating rate of 10°C/minute, then, the sample was cooled down to 0°C at a cooling rate of 10°C/minute. The sample weight was controlled at 5-10 mg.

Thermoqravimetry (TGA): The thermal decomposition temperatures of acrylic polymers were measured at a heating rate of 10°C/minute in N₂ using TA instruments Q5000 TGA. The sample weight was controlled at 5-10 mg. The samples were pre-dried under a vacuum oven at 100°C overnight.

Total light transmission: The total light transmission was measured from film and/or plaque samples in a transmission mode using Perkin Elmer Lambda 950 with a 150 mm integrating sphere. The selected UV/Vis wavelength range was from 200nm to 800nm in UV/Vis region.

Haze: Optical haze of clear film and/or plaque samples was measured using BYK HazeGard Plus under ASTM method D1003.

Refractive index: Refractive index of the polymer film was measured at three different wavelengths of 402nm, 518nm, and 636.5nm using an optical prism coupler Metricon 2010 from Metricon Inc while the refractive index was calculated at a selected wavelength of 589nm.

Tensile strength and elongation: The tensile strength, modulus and elongation of the tensile bars was evaluated using Instron Model 4202 at the crosshead speed of 5mm/minute using ASTM D638 method after being preconditioned at 23°C/48 hours. The tensile was at 152.4mm in length while the width was at12.7mm. The sample thickness was at3.175mm.

Notched Izod impact: Notched Izod impact strength or resistance was measured using ASTM D256 method with a 1.0J impact hammer at 23°C/50% relative humidity. The notched Izod bars were injection-molded at the size of 10.2mm (width) × 100mm (long) x3.2mm (thick).

Vicat softening temperatures: The samples were tested in Instron HV6M under 10N and 50N external forces using ASTM method D1525. The sample heating rate was controlled at the speed of 50°C/hour. The injection molded samples were annealed at ~20C below the Tg value for 16 hours and were kept in a desiccator oven before testing.

°Water haze: The injection molded plaque samples were immersed in a D. I. water bath at a selected temperature such as 70°C. The plaque sample size was molded at 45mm (width) × 67mm (length) × 3.2mm (thickness). The water haze was measured with a BYK HazeGard while the light transmission was measure using Color-i after the water on the sample surfaces being cleaned up with soft and dry tissues gently. The samples need to be cooled down completely to ambient temperature after at least 1.5 hour out of the water bath.

Yellowness index: Yellowness index (YI) was measured from 3.2mm injection molded plaques using Color-i at 23°C/50%RH under ASTM E313 method.

Surface hardness: Surface hardness was measured at the scale M by Rockwell Hardness after the plaque sample was annealed at the selected temperature (about 20C below its glass transition temperature)

Average particle diameter: Core-shell impact modifiers dispersed in a diluted solution (0.1-0.2 wt%) were spin-coated onto a Si wafer substrate and dried at 70°C for 1 hour. The modifier samples were coated with a thin layer of iridium with an ion beam coater from Southbay Technologies (model IBSe), and imaged using a Hitachi SU8010 field emission SEM at various magnifications. Custom software was used for particle size analysis. The average diameter of impact modifier particles was to be determined, based on more than 200 of individual particles in in SEM images, along with the median diameter.

### Example 1. Hydrophobic acrylic copolymer synthesis example

(pMMA copolymer MW2204 containing 1.0% tert-butyl cyclohexyl methacrylate with Tg=~116°C). This example demonstrates the preparation of a high molecular weight copolymer of methyl methacrylate and tert-butyl cyclohexyl methacrylate (having a 72% trans/28% cis isomer ratio). 9858.5 parts of methyl methacrylate and 100 parts of tert-butyl cyclohexyl methacrylate were charged into a reaction vessel near 0°C under N₂ with a mechanical stirring speed of 100rpm. In addition, Luperox^{®} 531 (from Arkema) was used as an initiator at a level of 2.0 parts while 38.5 parts of n-dodecyl mercaptan (n-DDM from Aldrich) was used as a chain transfer agent, along with 1.0 part of di-tert-dodecyl disulfide (DtDDS from Arkema). The polymerization reaction occurred at 160°C for 7 hours. When the conversion reached higher than 50%, the residual monomers were removed through a venting system. The resulting polymer was passed through a single-screw extruder at a die temperature of 240°C while the barrel temperatures were at 225-245°C. The melt stream went through a water bath before pelletization. Then the copolymer was pelletized into 3-4mm long resin pellets and dried at 100°C in a desiccator oven for 8 hours. The melt flow rate of the polymer was measured to be 5.41 g/10minutes at 230°C under 3.8kg. The refractive index of the resulting polymer was measured at 1.491 at 589 nm.

The resulting polymer was confirmed using ¹H NMR to possess the composition of pMMA/ tert-butyl cyclohexyl methacrylate (99.06/0.94w/w). The syndiotacticity of the copolymer was determined at 52% from the chemical shift of 44.5ppm using C¹³ NMR while the isotaticity and atacticity were measured at 7% and 41% from 45.5ppm and 45.0ppm. The glass transition temperature of the resin was measured to be 116°C in N₂ using DSC at the heating rate of 10°C/minute. Vicat softening temperatures were detected at 116°C and 112°C under 10N and 50N after samples being annealed at 95°C for 16 hours. The weight average molecular weight Mw of the resin was measured as being 78,500 g/mole using GPC along with a Mw/Mn (polydispersity) value of 1.9. The light transmission from a 3.2mm plaque was measured to be 92.3% at 560 nm using Lambda 950 with a 150mm integrating sphere while the haze was measured to be 0.4% using a hazemeter (Haze Gard Plus from BYK). The tensile modulus of the test sample was at 3.2GPa while the tensile strength was at 75 MPa, along with the tensile elongation of 10%.

Example 2. Hydrophobic acrylic copolymer synthesis example (pMMA copolymer MW2208 containing 1.0% tert-butyl cyclohexyl methacrylate with Tg=∼116°C). This example demonstrates the preparation of a high molecular weight copolymer of methyl methacrylate and tert-butyl cyclohexyl methacrylate (having a 67% trans/33% cis isomer ratio). 9857.4 parts of methyl methacrylate and 100 parts of tert-butyl cyclohexyl methacrylate were charged into a reaction vessel near 0°C under N₂ with a mechanical stirring speed of 100rpm. In addition, Luperox^{®} 531 (from Arkema) was used as an initiator at a level of 2.1 parts while 39.5 parts of n-dodecyl mercaptan (n-DDM from Aldrich) was used as a chain transfer agent, along with 1.0 part of di-tert-dodecyl disulfide (DtDDS from Arkema). The polymerization reaction occurred at 160°C for 7 hours. When the conversion reached higher than 50%, the residual monomers were removed through a venting system. The resulting polymer was passed through a single-screw extruder at a die temperature of 240°C while the barrel temperatures were at 230-245°C. The melt stream went through a water bath before pelletization. Then the copolymer was pelletized into 3-4mm long resin pellets and dried at 100°C in a desiccator oven for 8 hours. The melt flow rate of the polymer was measured to be 6.23 g/10minutes at 230°C under 3.8kg. The refractive index of the resulting polymer was measured at 1.491 at 589 nm.

The resulting polymer was confirmed using ¹H NMR to possess the composition of pMMA/ tert-butyl cyclohexyl methacrylate (99.0/1.0w/w). The syndiotacticity of the copolymer was determined at 51% from the chemical shift of 44.5ppm using C¹³ NMR while the isotaticity and atacticity were measured at 7% and 42% from 45.5ppm and 45.0ppm. The glass transition temperature of the resin was measured to be 116°C in N₂ using DSC at the heating rate of 10°C/minute. Vicat softening temperatures were detected at 117°C and 113°C under 10N and 50N after samples being annealed at 100°C for 16 hours. The weight average molecular weight Mw of the resin was measured as being 75,500 g/mole using GPC along with a Mw/Mn (polydispersity) value of 2.1. The light transmission from a 3.2mm plaque was measured to be 92.2% at 560 nm using Lambda 950 with a 150mm integrating sphere while the haze was measured to be 0.4% using a hazemeter (Haze Gard Plus from BYK). The tensile modulus of the test sample was at 3.2GPa while the tensile strength was at 70 MPa, along with the tensile elongation of 7%.

### Example 3.

This example demonstrates the preparation of a copolymer MW2204 of methyl methacrylate and tert-butyl cyclohexyl methacrylate (SR218A from Sartomer, containing 72% trans/28% cis isomer)-99.06/0.94, along with the commercial core-shell acrylic impact modifier (48% M212 from Kaneka). High Tg hydrophobic acrylic resins (MW2204, Tg=116°C) made at Trinseo were compounded with core-shell impact modifiers (M212 from Kaneka) having the particle size of 215 nm to form impact acrylic resins using a 27mm intermeshing co-rotating twin-screw extruder (from Leistritz) with the compounding speed of 25lbs/hour at a die temperature of 210°C and barrel temperatures of 210-230°C. UV stabilizer was also added into the formulation through pre-blending in the compounding. The compounded acrylic pellets were cut through a water bath at ambient temperature and dried at 100°C.

The melt flow rate of the resulting polymer was measured to be 1.06 g/10minutes at 230°C under 3.8kg. The glass transition temperature of the resin was measured to be 113°C in N₂ using DSC at the heating rate of 10°C/minute. Vicat softening temperatures were detected at 110°C and 95°C under 10N and 50N after samples being annealed at 95°C for 16 hours. The light transmission from a 3.2mm molded plaque was measured to be 90.0% at 560 nm using Lambda 950 while the haze was measured to be 1.8% using a hazemeter (Haze Gard Plus from BYK). The tensile modulus of the test sample was 1.61GPa while the tensile strength was 38 MPa, along with an elongation of 72%. Notched Izod impact strength was measured to be 6.6kJ/m² at 23°C. Rockwell surface hardness (M) was measured at 21 after the sample was annealed. Water haze gain was measured at 7.0% after 168 hours in the 70°C water bath immersion testing while the light transmission was measured to be 86.5% (with the light transmission retention of 96.1%), along with a YI of 6.6 (compared to an initial YI of 2.0).

**TABLE 1**

| Example 3 | Suppliers | Amount (parts) |
|---|---|---|
| Acrylic MW2204 | Trinseo | 5144 |
| Core Shell Impact Modifier (M212) | Kaneka | 4800 |
| Tinuvin^{®} 234 | BASF | 50 |
| Irganox^{®} 1010 | BASF | 2 |
| Irgafos^{®} 126 | BASF | 4 |

### Example 4.

This example demonstrates the preparation of a copolymer MW2208 of methyl methacrylate and tert-butyl cyclohexyl methacrylate (SR218A from Sartomer, containing 67% trans/33% cis isomer)-99.0/1.0, along with the commercial core-shell acrylic impact modifier (48% M210 from Kaneka). High Tg hydrophobic acrylic resins (MW2208, Tg=116°C) made at Trinseo were compounded with core-shell impact modifiers (M210 from Kaneka) having the particle size of 250nm to form impact acrylic resins using a 27mm co-rotating twin-screw extruder (from Leistritz) with the compounding speed of 25lbs/hour at a die temperature of 210°C and barrel temperatures of 220-240°C. UV stabilizer was also added into the formulation through pre-blending in the compounding. The compounded acrylic pellets were cut through a water bath at ambient temperature and dried at 100°C.

The melt flow rate of the resulting polymer was measured to be 0.89 g/10minutes at 230°C under 3.8kg. The glass transition temperature of the resin was measured to be 115°C in N₂ using DSC at the heating rate of 10°C/minute. Vicat softening temperatures were detected at 114°C and 97°C under 10N and 50N after samples being annealed at 95°C for 16 hours. The light transmission from a 3.2mm molded plaque was measured to be 90.5% at 560 nm using Lambda 950 while the haze was measured to be 1.2% using a hazemeter (Haze Gard Plus from BYK). The tensile modulus of the test sample was 1.39GPa while the tensile strength was 36 MPa, along with an elongation of 92%. Notched Izod impact strength was measured to be 7.3kJ/m² at 23°C. Rockwell surface hardness (M) was measured at 21 after the sample was annealed. Water haze gain was measured to be 4.8% after 168 hours in the 70°C water bath immersion testing while the light transmission was measured to be 85.1% (with the light transmission retention of 94.0%), along with a YI of 9.1 (compared to an initial YI of 2.5).

**TABLE 2**

| Example 4 | Suppliers | Amount (parts) |
|---|---|---|
| Acrylic MW2208 | Trinseo | 5160 |
| Core Shell Impact Modifier (M210) | Kaneka | 4800 |
| UV Blend 10 (containing Tinuvin 234) | Trinseo | 40 |

### Example 5.

This example demonstrates the preparation of a copolymer MW2208 of methyl methacrylate and tert-butyl cyclohexyl methacrylate (SR218A from Sartomer, containing 67% trans/33% cis isomer)-99.0/1.0, along with the commercial core-shell acrylic impact modifier (40% M210 from Kaneka). High Tg hydrophobic acrylic resins (MW2208, Tg=116°C) made at Trinseo were compounded with core-shell impact modifiers (M210 from Kaneka) having the particle size of 250nm to form impact acrylic resins using a 27mm co-rotating twin-screw extruder (from Leistritz) with the compounding speed of 25lbs/hour at a die temperature of 210°C and barrel temperatures of 220-240°C. UV stabilizer was also added into the formulation through pre-blending in the compounding. The compounded acrylic pellets were cut through a water bath at ambient temperature and dried at 100°C.

The melt flow rate of the resulting polymer was measured to be 1.4 g/10minutes at 230°C under 3.8kg. The glass transition temperature of the resin was measured to be 115°C in N₂ using DSC at the heating rate of 10°C/minute. Vicat softening temperatures were detected at 115°C and 103°C under 10N and 50N after samples being annealed at 95°C for 16 hours. The light transmission from a 3.2mm molded plaque was measured to be 90.3% at 560 nm using Lambda 950 while the haze was measured to be 2.1% using a hazemeter (Haze Gard Plus from BYK). The tensile modulus of the test sample was 1.55GPa while the tensile strength was 38 MPa, along with an elongation of 85%. Notched Izod impact resistance/strength was measured to be 6.7kJ/m² at 23°C. Rockwell surface hardness (M) was measured at 37 after the sample being annealed. Water haze gain was measured at 4.9% after 168 hours in the 70°C water bath immersion testing while the light transmission was to be 86.3% (with the light transmission retention of 95.6%), along with the YI of 5.9 (compared to an initial YI of 2.3).

**TABLE 3**

| Example 5 | Suppliers | Amount (parts) |
|---|---|---|
| Acrylic MW2208 | Trinseo | 5944 |
| Core Shell Impact Modifier (M210) | Kaneka | 4000 |
| Tinuvin^{®} 234 | BASF | 50 |
| Irganox^{®} 1010 | BASF | 2 |
| Irgafos^{®} 126 | BASF | 4 |

### Example 6.

This example demonstrates the preparation of a copolymer MW2204 of methyl methacrylate and tert-butyl cyclohexyl methacrylate (SR218A from Sartomer, containing 72% trans/28% cis isomer)-99.06/0.94, along with the commercial core-shell acrylic impact modifier (40% M212 from Kaneka). High Tg hydrophobic acrylic resins (MW2204, Tg=116°C) made at Trinseo were compounded with core-shell impact modifiers (M212 from Kaneka) having the particle size of 215 nm to form impact acrylic resins using a 27mm co-rotating twin-screw extruder (from Leistritz) with the compounding speed of 25lbs/hour at a die temperature of 210°C and barrel temperatures of 220-240°C. UV stabilizer was also added into the formulation through pre-blending in the compounding. The compounded acrylic pellets were cut through a water bath at ambient temperature and dried at 100°C.

The melt flow rate of the resulting polymer was measured to be 1.77 g/10minutes at 230°C under 3.8kg. The glass transition temperature of the resin was measured to be 114°C in N₂ using DSC at the heating rate of 10°C/minute. Vicat softening temperatures were detected at 114°C and 102°C under 10N and 50N after samples being annealed at 95°C for 16 hours. The light transmission from a 3.2mm molded plaque was measured to be 90.0% at 560 nm using Lambda 950 while the haze was measured to be 1.8% using a hazemeter (Haze Gard Plus from BYK). The tensile modulus of the test sample was 1.6GPa while the tensile strength was 38 MPa, along with an elongation of 85%. Notched Izod impact resistance/strength was measured to be 6.6kJ/m² at ambient temperature. Rockwell surface hardness (M) was measured at 42 after the sample being annealed. Water haze gain was measured at 7.0% after 168 hours in the 70°C water bath immersion testing while the light transmission was measured to be 85.6% (with the light transmission retention of 95.1%), along with a YI of 3.8 (compared to an initial YI of 1.1).

**TABLE 4**

| Example 6 | Suppliers | Amount (parts) |
|---|---|---|
| Acrylic MW2204 | Trinseo | 5945 |
| Core Shell Impact Modifier (M212) | Kaneka | 4000 |
| Tinuvin^{®} 234 | BASF | 50 |
| Irgafos^{®} 126 | BASF | 5 |

### Example 7.

This example demonstrates the preparation of a copolymer MW2204 of methyl methacrylate and tert-butyl cyclohexyl methacrylate (SR218A from Sartomer, containing 72% trans/28% cis isomer)-99.06/0.94, along with the commercial core-shell acrylic impact modifier (35% M210 from Kaneka). High Tg hydrophobic acrylic resins (MW2204, Tg=116°C) made at Trinseo were compounded with core-shell impact modifiers (M210 from Kaneka) having the particle size of 250nm to form impact acrylic resins using a 27mm co-rotating twin-screw extruder (from Leistritz) with the compounding speed of 25lbs/hour at a die temperature of 210°C and barrel temperatures of 220-240°C. UV stabilizer was also added into the formulation through pre-blending in the compounding. The compounded acrylic pellets were cut through a water bath at ambient temperature and dried at 100°C.

The melt flow rate of the resulting polymer was measured to be 1.51 g/10minutes at 230°C under 3.8kg. The glass transition temperature of the resin was measured to be 115°C in N₂ using DSC at the heating rate of 10°C/minute. Vicat softening temperatures were detected at 115°C and 104°C under 10N and 50N after samples being annealed at 95°C for 16 hours. The light transmission from a 3.2mm molded plaque was measured to be 90.3% at 560 nm using Lambda 950 while the haze was measured to be 1.9% using a hazemeter (Haze Gard Plus from BYK). The tensile modulus of the test sample was 1.72GPa while the tensile strength was 42 MPa, along with an elongation of 82%. Notched Izod impact resistance/strength was measured to be 6.9kJ/m² at 23°C. Rockwell surface hardness (M) was measured at 45 after the sample being annealed. Water haze gain was measured at 6.3% after 168 hours in the 70°C water bath immersion testing while the light transmission was measured to be 87.5% (with the light transmission retention of 96.9%), along with a YI_of 4.1 (compared to an initial YI of 1.7).

**TABLE 5**

| Example 7 | Suppliers | Amount (parts) |
|---|---|---|
| Acrylic MW2204 | Trinseo | 6444 |
| Core Shell Impact Modifier (M210) | Kaneka | 3500 |
| Tinuvin^{®} 234 | BASF | 50 |
| Irganox^{®} 1010 | BASF | 2 |
| Irgafos^{®} 126 | BASF | 4 |

### Example 8.

This example demonstrates the preparation of a copolymer MW2204 of methyl methacrylate and tert-butyl cyclohexyl methacrylate (SR218A from Sartomer, containing 72% trans/28% cis isomer)-99.06/0.94, along with the commercial core-shell acrylic impact modifier (35% M212 from Kaneka). High Tg hydrophobic acrylic resins (MW2204, Tg=116°C) made at Trinseo were compounded with core-shell impact modifiers (M212 from Kaneka) having the particle size of 215 nm to form impact acrylic resins using a 27mm co-rotating twin-screw extruder (from Leistritz) with the compounding speed of 25lbs/hour at a die temperature of 210°C and barrel temperatures of 220-240°C. UV stabilizer was also added into the formulation through pre-blending in the compounding. The compounded acrylic pellets were cut through a water bath at ambient temperature and dried at 100°C.

The melt flow rate of the resulting polymer was measured to be 1.91 g/10minutes at 230°C under 3.8kg. The glass transition temperature of the resin was measured to be 116°C in N₂ using DSC at the heating rate of 10°C/minute. Vicat softening temperatures were detected at 116°C and 106°C under 10N and 50N after samples being annealed at 95°C for 16 hours. The light transmission from a 3.2mm molded plaque was measured to be 90.6% at 560 nm using Lambda 950 while the haze was measured to be 2.1% using a hazemeter (Haze Gard Plus from BYK). The tensile modulus of the test sample was 2.03GPa while the tensile strength was 50 MPa, along with an elongation of 51%. Notched Izod impact resistance/strength was measured to be 6.0kJ/m² at 23°C. Rockwell surface hardness (M) was measured at 55 after the sample being annealed. Water haze gain was measured at 4.2% after 168 hours in the 70°C water bath immersion testing while the light transmission was measured to be 88.1% (with the light transmission retention of 97.2%), along with a YI of 2.3 (compared to an initial YI of 1.3).

**TABLE 6**

| Example 8 | Suppliers | Amount (parts) |
|---|---|---|
| Acrylic MW2204 | Trinseo | 6444 |
| Core Shell Impact Modifier (M212) | Kaneka | 3500 |
| Tinuvin^{®} 234 | BASF | 50 |
| Irganox^{®} 1010 | BASF | 2 |
| Irgafos^{®} 126 | BASF | 4 |

### Example 9.

This example demonstrates the preparation of a copolymer MW2204 of methyl methacrylate and tert-butyl cyclohexyl methacrylate (SR218A from Sartomer, containing 72% trans/28% cis isomer)-99.06/0.94, along with the commercial core-shell acrylic impact modifier (30% M210 from Kaneka). High Tg hydrophobic acrylic resins (MW2204, Tg=116°C) made at Trinseo were compounded with Paraloid^{®} B60 (from Dow Chemical) and core-shell impact modifiers (M210 from Kaneka) having the particle size of 250nm to form impact acrylic resins. A 27mm co-rotating twin-screw extruder (from Leistritz) was utilized during the compounding with the speed of 25lbs/hour at a die temperature of 210°C and barrel temperatures of 210-230°C. UV stabilizer was also added into the formulation through pre-blending in the compounding. The compounded acrylic pellets were cut through a water bath at ambient temperature and dried at 100°C.

The melt flow rate of the resulting polymer was measured to be 3.09 g/10minutes at 230°C under 3.8kg. The glass transition temperature of the resin was measured to be 114°C in N₂ using DSC at the heating rate of 10°C/minute. Vicat softening temperatures were detected at 113°C and 103°C under 10N and 50N after samples being annealed at 95°C for 16 hours. The light transmission from a 3.2mm molded plaque was measured to be 91.3% at 560 nm using Lambda 950 while the haze was measured to be 1.4% using a hazemeter (Haze Gard Plus from BYK). The tensile modulus of the test sample was 1.86GPa while the tensile strength was 44MPa, along with an elongation of 49%. Notched Izod impact resistance/strength was measured to be 4.9kJ/m² at 23°C. Rockwell surface hardness (M) was measured at 50 after the sample being annealed. Water haze gain was measured at 3.7% after 168 hours in the 70°C water bath immersion testing while the light transmission was measured to be 88.2% (with the light transmission retention of 96.6%), along with a YI of 3.7 (compared to an initial YI of 1.6).

**TABLE 7**

| Example 9 | Suppliers | Amount (parts) |
|---|---|---|
| Acrylic MW2204 | Trinseo | 5944 |
| Core Shell Impact Modifier (M210) | Kaneka | 3000 |
| Paraloid^{®} B60 | Dow Chemical | 1000 |
| Tinuvin^{®} 234 | BASF | 50 |
| Irgafos^{®} 126 | BASF | 6 |

### Example 10.

This example demonstrates the preparation of a copolymer MW2204 of methyl methacrylate and tert-butyl cyclohexyl methacrylate (SR218A from Sartomer, containing 72% trans/28% cis isomer)-99.06/0.94, along with the commercial core-shell acrylic impact modifier (30% M212 from Kaneka). High Tg hydrophobic acrylic resins (MW2204, Tg=116°C) made at Trinseo were compounded with core-shell impact modifiers (M210 from Kaneka) having the particle size of 215 nm to form impact acrylic resins using a 27mm co-rotating twin-screw extruder (from Leistritz) with the compounding speed of 25lbs/hour at a die temperature of 210°C and barrel temperatures of 210-230°C. UV stabilizer was also added into the formulation through pre-blending in the compounding. The compounded acrylic pellets were cut through a water bath at ambient temperature and dried at 100°C.

The melt flow rate of the resulting polymer was measured to be 2.37 g/10minutes at 230°C under 3.8kg. The glass transition temperature of the resin was measured to be 116°C in N₂ using DSC at the heating rate of 10°C/minute. Vicat softening temperatures were detected at 116°C and 107°C under 10N and 50N after samples being annealed at 95°C for 16 hours. The light transmission from a 3.2mm molded plaque was measured to be 90.4% at 560 nm using Lambda 950 while the haze was measured to be 2.3% using a hazemeter (Haze Gard Plus from BYK). The tensile modulus of the test sample was 2.12GPa while the tensile strength was 50MPa, along with an elongation of 46%. Notched Izod impact resistance/strength was measured to be 4.7kJ/m² at 23°C. Rockwell surface hardness (M) was measured at 62 after the sample being annealed. Water haze gain was measured at 2.3% after 168 hours in the 70°C water bath immersion testing while the light transmission was measured to be 88.0% (with the light transmission retention of 97.3%), along with a YI of 1.9 (compared to an initial YI of 1.2).

**TABLE 8**

| Example 10 | Suppliers | Amount (parts) |
|---|---|---|
| Acrylic MW2204 | Trinseo | 6944 |
| Core Shell Impact Modifier (M212) | Kaneka | 3000 |
| Tinuvin^{®} 234 | BASF | 50 |
| Irgafos^{®} 126 | BASF | 6 |

### Example 11.

This example demonstrates the preparation of a copolymer MW2204 of methyl methacrylate and tert-butyl cyclohexyl methacrylate (SR218A from Sartomer, containing 72% trans/28% cis isomer)-99.06/0.94, along with the commercial core-shell acrylic impact modifier (25% M210 from Kaneka). High Tg hydrophobic acrylic resins (MW2204, Tg=116°C) made at Trinseo were compounded with core-shell impact modifiers (M210 from Kaneka) having the particle size of 250nm to form impact acrylic resins using a 27mm co-rotating twin-screw extruder (from Leistritz) with the compounding speed of 25lbs/hour at a die temperature of 210°C and barrel temperatures of 220-240°C. UV stabilizer was also added into the formulation through pre-blending in the compounding. The compounded acrylic pellets were cut through a water bath at ambient temperature and dried at 100°C.

The melt flow rate of the resulting polymer was measured to be 2.08 g/10minutes at 230°C under 3.8kg. The glass transition temperature of the resin was measured to be 117°C in N₂ using DSC at the heating rate of 10°C/minute. Vicat softening temperatures were detected at 117°C and 109°C under 10N and 50N after samples being annealed at 95°C for 16 hours. The light transmission from a 3.2mm molded plaque was measured to be 90.7% at 560 nm using Lambda 950 while the haze was measured to be 1.8% using a hazemeter (Haze Gard Plus from BYK). The tensile modulus of the test sample was 1.93GPa while the tensile strength was 48MPa, along with an elongation of 79%. Notched Izod impact resistance/strength was measured to be 5.8kJ/m² at 23°C. Rockwell surface hardness (M) was measured at 68 after the sample being annealed. Water haze gain was measured at 3.4% after 168 hours in the 70°C water bath immersion testing while the light transmission was measured to be 88.5% (with the light transmission retention of 97.6%), along with a YI of 2.4 (compared to an initial YI of 1.2).

**TABLE 9**

| Example 11 | Suppliers | Amount (parts) |
|---|---|---|
| Acrylic MW2204 | Trinseo | 7444 |
| Core Shell Impact Modifier (M210) | Kaneka | 2500 |
| Tinuvin^{®} 234 | BASF | 50 |
| Irganox^{®} 1010 | BASF | 2 |
| Irgafos^{®} 126 | BASF | 4 |

### Example 12.

This example demonstrates the preparation of a copolymer MW2204 of methyl methacrylate and tert-butyl cyclohexyl methacrylate (SR218A from Sartomer, containing 72% trans/28% cis isomer)-99.06/0.94, along with the commercial core-shell acrylic impact modifier (35% M210 from Kaneka). High Tg hydrophobic acrylic resins (MW2204, Tg=116°C) made at Trinseo were compounded with Paraloid^{®} B60 (from Dow Chemical) and core-shell impact modifiers (M210 from Kaneka) having the particle size of 250nm to form impact acrylic resins. A 27mm co-rotating twin-screw extruder (from Leistritz) was utilized during the compounding with the speed of 25lbs/hour at a die temperature of 210°C and barrel temperatures of 210-230°C. UV stabilizer was also added into the formulation through pre-blending in the compounding. The compounded acrylic pellets were cut through a water bath at ambient temperature and dried at 100°C.

The melt flow rate of the resulting polymer was measured to be 2.57 g/10minutes at 230°C under 3.8kg. The glass transition temperature of the resin was measured to be 111°C in N₂ using DSC at the heating rate of 10°C/minute. Vicat softening temperatures were detected at 111°C and 98°C under 10N and 50N after samples being annealed at 95°C for 16 hours. The light transmission from a 3.2mm molded plaque was measured to be 90.1% at 560 nm using Lambda 950 while the haze was measured to be 1.8% using a hazemeter (Haze Gard Plus from BYK). The tensile modulus of the test sample was 1.70GPa while the tensile strength was 42MPa, along with an elongation of 80%. Notched Izod impact resistance/strength was measured to be 5.4kJ/m² at 23°C. Rockwell surface hardness (M) was measured at 39 after the sample being annealed. Water haze gain was measured at 5.2% after 168 hours in the 70°C water bath immersion testing while the light transmission was measured to be 85.2% (with the light transmission retention of 94.6%) along with a YI of 7.0 (compared to an initial YI of 1.9).

**TABLE 10**

| Example 12 | Suppliers | Amount (parts) |
|---|---|---|
| Acrylic MW2204 | Trinseo | 5944 |
| Core Shell Impact Modifier (M210) | Kaneka | 3000 |
| Paraloid^{®} B60 | Dow Chemical | 1000 |
| Tinuvin^{®} 234 | BASF | 50 |
| Irgafos^{®} 126 | BASF | 6 |

### Comparative Example 1.

Plexiglas^{®}V920acrylic copolymer resin (from Trinseo) were compounded with core-shell impact modifiers (48 wt.% MPD91 from Trinseo) having the particle size of 300nm to form impact acrylic resins using a 27mm co-rotating twin-screw extruder (from Leistritz) with the line speed of 25lbs/hour at a die temperature of 200°C and barrel temperatures of 210-230°C. UV stabilizer (Tinuvin^{®}234) was also added into the formulation through pre-blending in the compounding. The compounded acrylic pellets were cut through a water bath at ambient temperature and dried at 85°C.

The melt flow rate of the resulting polymer was measured to be 1.14 g/10minutes at 230°C under 3.8kg. The glass transition temperature of the resin was measured to be 106°C in N₂ using DSC at the heating rate of 10°C/minute. Vicat softening temperatures were detected at 105°C and 98°C under 10N and 50N after samples being annealed at 85°C for 16 hours. The light transmission from a 3.2mm molded plaque was measured to be 90.5% at 560 nm using Lambda 950 while the haze was measured to be 1.5% using a hazemeter (Haze Gard Plus from BYK). The tensile modulus of the test sample was 1.83GPa while the tensile strength was 42MPa, along with an elongation of 70%. Notched Izod impact strength was measured to be 5.7kJ/m² at 23°C/50%RH. Rockwell surface hardness (M) was measured at 46 after the sample being annealed. Water haze gain was measured at 60% after 168 hours in the 70°C water bath immersion testing while the light transmission was measured to 57.5% (with the light transmission retention of 63.5%), along with the YI of 15.5.4 (compared to an initial YI of 0.2),

**COMPARATIVE TABLE 1**

| Comparative Example 1 | Suppliers | Amount (parts) |
|---|---|---|
| Plexiglas^{®} V920 | Trinseo | 5150 |
| Core Shell Impact Modifier (MPD91) | Trinseo | 4800 |
| Tinuvin^{®} 234 | BASF | 40 |
| Irganox^{®} 1010 | BASF | 2 |
| Irgafos^{®} 126 | BASF | 4 |

### Comparative Example 2.

This example demonstrates the preparation of a copolymer MW2009 of methyl methacrylate and tert-butyl cyclohexyl methacrylate (SR218A from Sartomer, containing 62% trans/38% cis isomer)-99.0/1.0, along with the core-shell acrylic impact modifier (45% MPD85T from Trinseo). The glass transition temperature of the resin was measured to be 117°C in N₂ using DSC at the heating rate of 10°C/minute. The weight average molecular weight Mw of the resin was measured as being 81,500 g/mole using GPC along with a Mw/Mn (polydispersity) value of 1.9. High Tg hydrophobic acrylic resins (MW2009, Tg=117°C) made at Trinseo were compounded with core-shell impact modifiers (MPD85T) having the particle size of 300 nm to form impact acrylic resins using a 27mm co-rotating twin-screw extruder (from Leistritz) with the compounding speed of 25lbs/hour at a die temperature of 210°C and barrel temperatures of 210-230°C. UV stabilizer was also added into the formulation through pre-blending in the compounding. The compounded acrylic pellets were cut through a water bath at ambient temperature and dried at 100°C.

The melt flow rate of the resulting polymer was measured to be 0.85 g/10minutes at 230°C under 3.8kg. The glass transition temperature of the resin was measured to be 117°C in N₂ using DSC at the heating rate of 10°C/minute. Vicat softening temperatures were detected at 115°C and 105°C under 10N and 50N after samples being annealed at 95°C for 16 hours. The light transmission from a 3.2mm molded plaque was measured to be 91.2% at 560 nm using Lambda 950 while the haze was measured to be 1.3% using a hazemeter (Haze Gard Plus from BYK). The tensile modulus of the test sample was 1.82GPa while the tensile strength was 42MPa, along with an elongation of 54%. Notched Izod impact resistance/strength was measured to be 5.5kJ/m² at 23°C. Rockwell surface hardness (M) was measured at 50 after the sample being annealed. Water haze gain was measured at 15.9% after 168 hours in the 70°C water bath immersion testing while the light transmission was measured to be 77.0% (with the light transmission retention of 84.4%), along with the YI of 13.9 (compared to an initial YI of 3.2),

**COMPARATIVE TABLE 2**

| Comparative example 2 | Suppliers | Amount (parts) |
|---|---|---|
| Acrylic MW2009 | Trinseo | 5444 |
| Core Shell Impact Modifier (MPD85T) | Altuglas | 4500 |
| Tinuvin^{®} 234 | BASF | 50 |
| Irganox^{®} 1010 | BASF | 2 |
| Irgafos^{®} 126 | BASF | 4 |

### Comparative Example 3.

The melt flow rate of Plexiglas^{®} Resist AG-100 polymer from Rohm was measured to be 1.45 g/10minutes at 230°C under 3.8kg. The glass transition temperature of the resin was measured to be 111°C in N₂ using DSC at the heating rate of 10°C/minute. AG-100 consisted of 32 wt. % of acrylic core-shell impact modifiers having the particle size of 290-300 nm in pMMA/MA (98.5/1.5) copolymers. Vicat softening temperatures were detected at 111°C and 101°C under 10N and 50N after samples being annealed at 90°C for 16 hours. The light transmission from a 3.2mm molded plaque was measured to be 90.5% at 560 nm using Lambda 950 while the haze was measured to be 1.5% using a hazemeter (Haze Gard Plus from BYK). The tensile modulus of the test sample was 1.99GPa while the tensile strength was 46MPa, along with an elongation of 81%. Notched Izod impact resistance/strength was measured to be 6.0kJ/m² at 23°C. Rockwell surface hardness (M) was measured at 56 after the sample being annealed. Water haze gain was measured at 34.3% after 168 hours in the 70°C water bath immersion testing while the light transmission was measured to be 72.6% (with the light transmission retention of 80.2%), along with the YI of 9.4 (compared to an initial YI of -0.1),

Summary of Examples: As can be seen from the examples, the impact-modified acrylic compositions of the invention provide much higher water haze resistance, higher heat resistance, higher impact resistance, and/or higher surface hardness than commercial impact-modified commercial products.

## Claims

1. An impact modified hydrophobic acrylic composition, comprising:
a) from 40 to 95, preferably from 50 to 90, more preferably from 50 to 80, and most preferably from 55 to 70 percent by weight of a hydrophobic acrylic copolymer, based on the weight of the hydrophobic polymer plus impact modifier, wherein said hydrophobic acrylic copolymer comprises:
1) from 0.1 to 20, preferably 0.3 to 10, more preferably from 0.5 to 5 weight percent of monomer units chosen from tert-butyl cyclohexyl methacrylate, 3,3,5-trimethylcyclohexyl(meth)acrylate, and a mixture thereof;
2) from 50 to 80 weight percent methyl methacrylate monomer units;
3) optionally from 0 to 49.9 weight percent of other monomer units copolymerizable with methyl methacrylate;
the percent based on the total monomer units in the hydrophobic acrylic copolymer, wherein said copolymer has a Tg of from 111°C to 140°C, preferably from 113°C to 135°C, preferably from 115°C to 130°C, and more preferably from 116°C to 125°C;
b) optionally other (meth)acrylic copolymers;
c) from 5 to 60, preferably 10 to 50, more preferably 20 to 50, and most preferably 30 to 45 weight percent of one or more core-shell impact modifiers, wherein the core-shell impact modifiers have a volume average particle size of from 70 to 350nm, preferably from 100 to 350 nm, preferably 150-300, more preferably from 200-250 nm; wherein the Tg of said shell layer is greater than 105°C, preferably greater than 107°C;
wherein said percentages of polymers a), b), and c) in the impact modified hydrophobic acrylic composition adds up to 100%;
wherein the melt flow rate of the impact modified hydrophobic acrylic composition is greater than 0.7, preferably greater than 1.0, more preferably greater than 1.2, and more preferably greater than 1.5 g/10 minutes at 230°C under 3.8 kg; and wherein the notched Izod impact strength of the impact modified hydrophobic acrylic composition is greater than 4.5kJ/m², preferably greater than 5.4kJ/m², and more preferably greater than 6.4kJ/m².

2. The impact modified hydrophobic acrylic composition of claim 1, wherein said impact modified hydrophobic acrylic composition has a water haze gain of less than 8.0 percent after 168 hours at 70°C water bath immersion tests, preferably less than 6.0 percent, more preferably less than 4.0 percent, and even less than 2.0%.

3. The impact modified hydrophobic acrylic composition of claims 1 or 2, wherein said impact modified hydrophobic acrylic composition has a light transmission retention of 86% after 168 hours at 70°C water bath immersion tests, preferably higher than 90%, more preferably higher than 94%, and even higher than 96%.

4. The impact modified hydrophobic acrylic composition of any of claims 1 to 3, wherein said other (meth)acrylic composition comprises 5-20% of a hydrophobic copolymer/terpolymer containing butyl methacrylate (BMA)/MMA with a weight average molecular weight in the range of 30,000-50,000 g/mole measured in GPC.

5. The impact modified hydrophobic acrylic composition of any of claims 1 to 4, wherein the core-shell impact modifiers are comprised of greater than 45 weight percent, preferably greater than 50 weight percent, of a rubber, having a Tg of less than 0°C, preferably less than -10°C, more preferably less than -20°C.

6. The impact modified hydrophobic acrylic composition of any of claims 1 to 5, wherein said tert-butyl cyclohexyl (meth)acrylate, and/or 3,3,5-trimethylcyclohexyl(meth)acrylate monomer units have a trans/cis ratio of from 30/70 to 97/3, more preferably from 40/60 to 80/20, and most preferably from 50/50 to 75/25.

7. The impact modified hydrophobic acrylic composition of any of claims 1 to 6, wherein said optional other monomer units copolymerizable with methyl methacrylate are selected from the group consisting of styrene, alpha methyl styrene, acrylonitrile, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers, (meth) acrylic acids, methacrylic acid, acrylic acid, and mixtures thereof.

8. The impact modified hydrophobic acrylic composition of any of claims 1 to 7, wherein said optional other monomer units copolymerizable with methyl methacrylate comprise from 0.01 to 25 weight percent of a high Tg comonomer, selected from the group consisting of methacrylic acid, acrylic acid, itaconic acid, alpha methyl styrene, maleic anhydride, maleimide, isobornyl methacrylate, norbornyl methacrylate, t-butyl methacrylate, cyclohexyl methacrylate, acrylamide and methacrylamide, and mixtures thereof.

9. The impact modified hydrophobic acrylic composition of any of claims 1 to 8, wherein said hydrophobic acrylic copolymer has a weight average molecular weight of from 55,000 g/mole to 250,000 g/mole, preferably from 70,000 g/mole to 200,000 g/mole, more preferably from greater than 80,000 g/mole to 160,000 g/mole.

10. The impact modified hydrophobic acrylic composition of any of claims 1 to 9, wherein said composition is optically clear, having a TWLT of at least 89%, preferably at least 90% and more preferably at least 91%; and an optical haze of less than 4%, preferably less than 3% and most preferably less than 2%, as measured on a 3.2 mm thick plaque, using ASTM method D1003.

11. The impact modified hydrophobic acrylic composition of any of claims 1 to 10, wherein said acrylic composition has a refractive index of 1.47-1.50 at the wavelength of 589 nm.

12. The impact modified hydrophobic acrylic composition of any of claims 1 to 11, wherein said acrylic composition further comprises fillers, surface modifying additives, processing aids, fibers, lubricant agents, matting agents, heat stabilizers, flame retardants, synergists, matting agents, plasticizers, fillers, coloring agents, pigments, antioxidants, antistatic agents, surfactants, toner, refractive index matching additives; additives with specific light diffraction, light absorbing, or light reflection characteristics; antioxidants, and dispersing aids, in effective amounts.

13. The impact modified hydrophobic acrylic composition of claim 12, wherein said antioxidants are present at from 50 to 3500 ppm, based on the weight of the polymer solids.

14. An article comprising the impact modified hydrophobic acrylic composition of claims 1 to 13, wherein said article is selected form the group consisting of automotive LED grille lighting, automotive LED head map covers, automotive LED front/rear signature lighting pipes, optical protection films, moisture barrier films, digital printing films, weatherable surface protection layers, surface protecting layers for decking/railing, automotive, electronics, medical, digital printing, laser cutting, building and construction, lighting pipes, thin wall parts, optical lenses, extruded films, (co-)extruded sheets/profiles, thermo-formable sheets, cast sheets, composites, medical devices, and LED/OLED displays.
